# EUROPEAN PATENT APPLICATION

(11) **EP 4 000 406 A1**
(43) Date of publication of application: **25.05.2022**
(21) Application number: 20208591.6
(22) Date of filing: 19.11.2020
(51) Int. Cl.: A23G 1/56, A23L 7/10, A23L 25/00, A23L 33/00

(54) **METHOD FOR PRODUCING OAT, RICE OR QUINOA SPREAD, AND SPREAD THEREOF**

(71) Applicant: Polar Glucan Oy, 00990 Helsinki (FI); Gredon Invest Oy, 33880 Lempäälä (FI)
(72) Inventor: AWADH, Jamila, 00990 Helsinki (FI); LEHTOMÄKI, Ilkka, 00990 Helsinki (FI); MYLLYMÄKI, Olavi, 00990 Helsinki (FI); ISO-KUNGAS, Marko, 33880 Lempäälä (FI)
(74) Representative: Laine IP Oy

(57) **Abstract**

According to an example aspect of the present invention, there is provided a novel method for producing oat, rice and/or quinoa spread, such as sweet, cacao or savoury spread or margarine/butter, by utilizing precooked fine milled flour material(s), and a spread thereof, having smooth texture and pleasant mouthfeel, where the spread is preferably allergen-free.

## Description

### FIELD

The present invention relates to a method for producing a spread, which contains substantial amounts of oat, rice, and/or quinoa flour. The method is particularly applicable for producing vegetable-based and allergen-free spreads. The present invention thus also relates to sweet or salty spreads produced by such method.

### BACKGROUND

Vegetable margarines are emulsions of oil and water. Typically, margarines do not contain much non-oily seed flour such as oats, rice, or quinoa, etc. Margarines may contain, however, for example oat milk, rice milk or quinoa milk or particles of the corresponding material to give mouth bite.

Vegetable butters do not contain much added water. Peanut butters and other nut-based butters can be found from markets. There are also several butters made from oily seeds for example from sesame seeds (tahini) and sunflower. The butters do not contain much flour from seeds that have low level of oil. The non-oily flour will give sandy mouthfeel and the flour will be left in the mouth while eating.

Chocolate is a product that has high level of fat and no water. Conching is a known fine milling operation in a chocolate process. Conching creates structure, which melts in the mouth. Conching mills the particles small during several hours. Sugar and other ingredients are added into the mass during conching and they are also milled to the target fineness. Conching operation does not contain water nor high temperature. Thus, conching cannot pre-cook starch.

Nutella contains several ingredients, such as sugar, palm oil, hazelnut, skim milk, cocoa, soy lecithin and vanillin. Nutella does not contain cereal flour or seeds that have low level of oil such as oats, rice, quinoa, etc.

Saari *et. al.* (2016, p. 116) has classified starches according to the particle sizes in the following way: 1) extremely small starch particles (0.3-2um) that are present in quinoa, amaranth, cow cockle, and pig weed; 2) small starch particles (2-10um) that are present in oats, rice, and buckwheat; 3) medium sized particles (5-30um) that are present in tapioca, barley, maize, and sorghum; and 4) large particles (up to 100 um) that are present in potato and canna. According to the authors intact oat starch has mean volumetric particle size of 8.5 µm and quinoa 1.6 µm.

The small starch particles do not give sandy mouthfeel. It is known that native starch particles are commercially difficult to fine mill. Other partially insoluble components like protein and fibre of oats, rice or quinoa can be milled fine.

There is still a need for technology for producing non-sandy, preferably vegetable-based spreads that have smooth and pleasant mouthfeel from starch-containing raw materials.

### SUMMARY OF THE INVENTION

The invention is defined by the features of the independent claims. Some specific embodiments are defined in the dependent claims.

According to an aspect of the present invention, there is provided a method for producing a sweet or salty spread that has a smooth texture, which melts in mouth. The production of the spread is scalable and is easy to adjust.

According to another aspect of the present invention, there is provided a sweet or salty spread, which is preferably vegetable-based and has no E-codes. The spread comprises pre-cooked fine milled flour material, which gives the spread its pleasant smooth mouthfeel.

These and other aspects, together with the advantages thereof over known solutions are achieved by the present invention, as hereinafter described and claimed.

The method according to the present invention is mainly characterized by what is stated in the characterizing part of claim 1.

The spread according to the present invention is mainly characterized by what is stated in the characterizing part of claim 7.

Considerable advantages are obtained by means of the invention. It is for example advantageous to use precooked fine milled flour materials for creating features such as good mouthfeel and texture to spreads without using external hydrocolloids. In addition, the process for producing the spread is easy and straightforward to carry out. Further advantage is that the present invention enables production of tasty and smooth spreads that can be made allergen-free.

Next, the present technology and further advantages will be described more closely with reference to certain embodiments.

### EMBODIMENTS

The present technology provides novel, preferably vegetable-based sweet or salty spreads with the herein described advantages over known and existing solutions. More precisely, the present invention relates to spreads comprising precooked fine milled flour material, which provides a smooth texture that melts in the mouth to the spread. Furthermore, the present technology provides a novel method for producing such sweet or salty spreads.

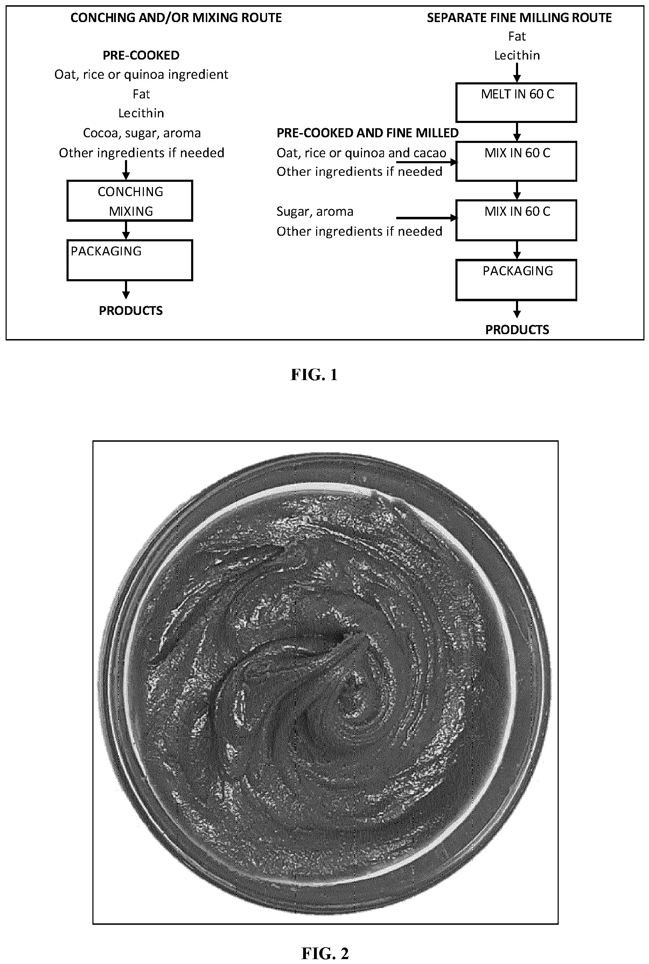

FIGURE 1 is a process scheme describing two alternative routes for producing the spread according to the present invention.
FIGURE 2 is a photo of a spread, which has been produced according to the method of the present invention.

Term "spread" herein means a food application, which is spreadable by for example knife or spoon in room temperature.

Term "precooking" herein means for example an extrusion process, which is used to make the starch portion of the flour either partially or fully water-soluble. Other appropriate precooking methods are described for example in EP2548448.

Term "cold soluble" herein means solubility greater than 2% by weight in water at a temperature below approximately 50 °C.

Term "fine milling" herein means a grinding step, which is used to produce particles, which cannot be noted in mouth, and to accelerate the dissolution and gelatinization of beta glucan and starch. Preferred particle size after fine milling can be defined for example as 97% smaller than 150 µm and 80% smaller than 75 µm.

Term "hydrocolloid" herein means a heterogeneous group of long chain polymers (polysaccharides and proteins) characterized by their property of forming viscous dispersions and/or gels when dispersed in water. External hydrocolloids are typically used in foods because of their ability to modify the rheology of food system, namely flow behavior (viscosity) and mechanical solid property (texture). Herein maltodextrin and colloidal oat flour are excluded from "hydrocolloids".

According to an embodiment of the present invention, the method for producing a sweet or salty spread comprises at least the steps of:
- precooking a cold soluble flour material comprising small starch particles in size of 0.3 to 10 µm,
- fine milling the precooked flour material,
- adding to the precooked and fine milled flour material ingredient(s) selected from fat, sugar or sweeteners, cacao, aromas, fine berry and fruit ingredients, milk ingredients, phenolic antioxidants, ground seeds, spices, lecithin and fibers, or any mixture thereof,
- mixing the precooked and fine milled flour material and the other ingredient(s) at temperature between 30 and 60 °C,
- cooling, collecting and packing the produced spread.

According to an embodiment of the present invention, the flour material is selected from oat, rice and quinoa, or any mixture thereof. If an oat flour is used, it is preferred to use cold soluble fine milled whole oat flour.

According to an embodiment of the present invention, it is preferred to use at least 10 wt-%, preferably at least 15 wt-% and most suitably at least 20 wt-% of the precooked and fine milled oat, rice and/or quinoa flour. Other ingredients are added to reach 100 wt-% as e.g. in examples 1 and 2.

When oat, rice or quinoa are pre-cooked and milled fine, they can be used as an ingredient in a spread (butter), where no water exists. Pre-cooked oat, rice or quinoa material can be milled fine in a conching process of chocolate production. They can also be milled fine before conching process such as precooked oat flour according to EP2548448.

According to an embodiment of the present invention, the spread has very low water activity. The moisture that is in the spread comes only from the moisture of raw materials. In conching process part of the water is evaporated.

When the flours are fine enough, other ingredient(s) such as fat and sugar are added and mixed together. Cacao, aromas like vanilla and lecithin can be added. Other ingredients for example fine berry and fruit ingredients can be used and add corresponding aromas. Sugar level can be reduced or replaced by erythritol or other suitable sugar replacer. The recipe can be adjusted by adding fine maltodextrin instead of sugar. Milk ingredients can also be added.

According to an embodiment of the present invention, fine milling of the flour material and mixing of the other ingredients is carried out simultaneously via a conching process.

The spread according to the present invention can also contain protein, fibres, phenolic antioxidants and other functional compounds brought by the flours and other ingredients.

According to an embodiment of the present invention, the fat ingredient is a solid fat, which has a melting point between 25 and 40 °C. The solid fat can thus be any solid fat, which has such melting point that it melts in the mouth. The practical melting point of cocoa butter is 34-38 °C, coconut oil 25 °C, palm oil 35 °C and shea oil 36 °C. The melting point values are indicative, because the value depends on the method and fatty acid content of the oil.

According to an embodiment of the present invention, no external hydrocolloids are being used for creating for example the smooth and pleasant mouthfeel of the spread, whereby the spread does not contain external hydrocolloids.

The spread according to the present invention does not necessarily require lecithin, but it is preferably used for securing the structure. Lecithin can be of any type which is used in conventional spreads.

According to an embodiment of the present invention, instead of cacao, fine berry or fruit flours can be used with corresponding aromas. The sugar is preferably fine icing sugar. Aromas can be for example vanilla, fruits, berries etc. Sugar level can be reduced with erythritol. The levels of the ingredients can be adjusted by adding fine maltodextrin, which compensates the missing ingredient.

When salty version of the spread is produced, sugar is replaced by maltodextrin and higher amount of solid fat is used. Salt, aromas, and other ingredients such as spices can also be added.

According to a further embodiment of the present invention, in order to create mouth bites to both sweet and salty spread, for example oat granules, ground seeds, dried berry pieces, granules containing high level of beta glucan or other bioactive compounds can be added.

In a preferred embodiment of the present invention, the spread is gluten-free, nut-free, egg-free, GMO-free and soy-free, and when not comprising milk ingredients also milk-free and vegan.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

The present invention can be an industrial process for producing industrial and consumer spreads. Applications such as confectionary, sweets, fillings, biscuits, cakes, savoury and other industrial applications belong to the scope of the present invention.

### EXAMPLES

### Example 1. Oat, quinoa and rice spread by using conching

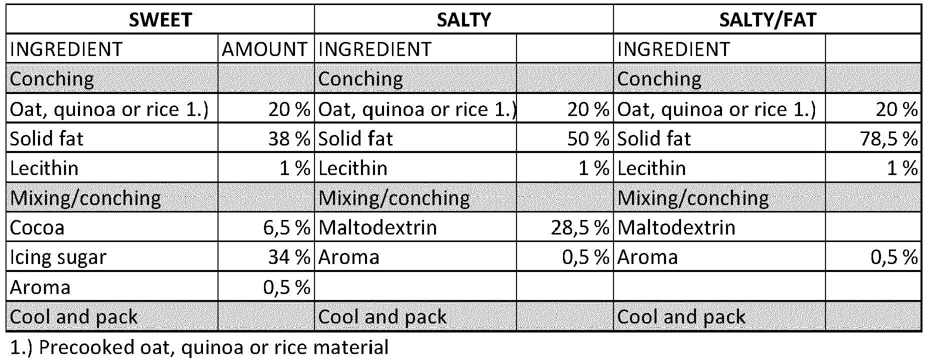

### Example 2. Oat, quinoa and rice spread from pre-cooked fine flours

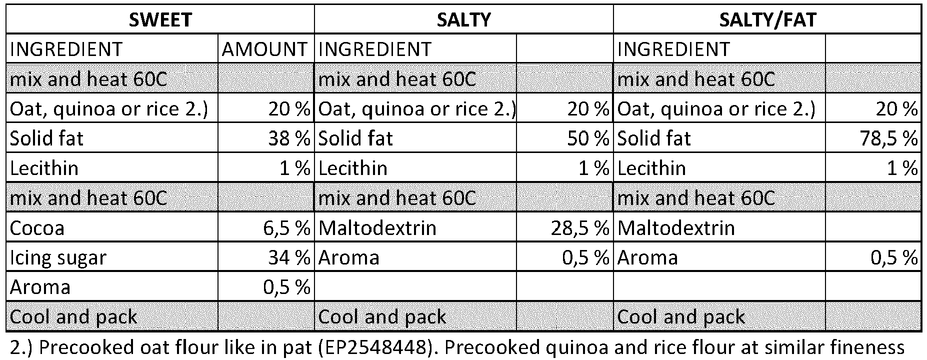

### CITATION LIST

### Patent literature:

EP2548448

### Non-patent literature:

Preparation and Characterization or Starch Particles for use in Pickering Emulsions, Saari H., Heravifar K., Rayner M., Wahlgren M., Sjöö M., Cereal Chem. 93(2):116-124.

## Claims

1. A method for producing a sweet or salty spread, **characterized in that** the method comprises at least the steps of:
- precooking a cold soluble flour material comprising starch particles in size of 0.3 to 10 µm,
- fine milling the precooked flour material,
- adding to the precooked and fine milled flour material ingredient(s) selected from fat, sugar or sweeteners, cacao, aromas, fine berry and fruit ingredients, milk ingredients, phenolic antioxidants, ground seeds, spices, lecithin and fibers, or any mixture thereof,
- mixing the precooked and fine milled flour material and the other ingredient(s) at a temperature between 30 and 60 °C,
- cooling, collecting and packing the produced spread.

2. The method according to claim 1, **characterized in that** the flour material is selected from oat, rice and quinoa, or any mixture thereof.

3. The method according to claim 1 or 2, **characterized in that** the flour material is cold soluble whole oat flour.

4. The method according to any of the preceding claims, **characterized in that** the fine milling of the flour material and mixing of the other ingredients is carried out simultaneously via a conching process.

5. The method according to any of the preceding claims, **characterized in that** the fat ingredient is a solid fat, which has a melting point between 25 and 40 °C.

6. The method according to any of the preceding claims, **characterized in that** no external hydrocolloids are being used.

7. A sweet or salty spread, **characterized in that** it comprises precooked and fine milled flours of oats, rice and/or quinoa, which contain small starch particles in size of 0.3 to 10 µm.

8. The spread according to claim 7, **characterized in that** it comprises at least 10 wt-%, preferably at least 15 wt-% and most suitably at least 20 wt-% of the precooked and fine milled oat, rice and/or quinoa flour.

9. The spread according to claim 7 or 8, **characterized in that** it is vegetable-based and has a smooth texture that melts in a mouth.

10. The spread according to any of claims 7 to 9, **characterized in that** it comprises ingredient(s) selected from fat, sugar or sweeteners, cacao, aromas, fine berry and fruit ingredients, milk ingredients, phenolic antioxidants, ground seeds, spices, lecithin and fibers, or any mixture thereof.

11. The spread according to claim 10, **characterized in that** the fat ingredient is a solid fat, which has a melting point between 25 and 40 °C.

12. The spread according to any of claims 7 to 11, **characterized in that** it does not contain external hydrocolloids.

13. The spread according to any of claims 7 to 12, **characterized in that** it is gluten-free, nut-free, egg-free, GMO-free and soy-free, and when not comprising milk ingredients also milk-free and vegan.

14. The spread according to any of claims 7 to 13, **characterized in** being produced by the method according to any of claims 1 to 6.

15. Use of precooked and fine milled oat, rice and/or quinoa as an ingredient in a spread.
